# EUROPÄISCHE PATENTSCHRIFT

(11) **EP 1 659 296 B1**
(45) Veröffentlichungstag und Bekanntmachung des Hinweises auf die Patenterteilung: **09.01.2008**
(21) Anmeldenummer: 05110437.0
(22) Anmeldetag: 07.11.2005
(51) Int. Cl.: F16B 2/18, F16B 5/12, B60R 13/04

(54) **Befestigungsvorrichtung für eine Zierleiste an Kraftwagen-Aufbauten**
Fastening device for a trim strip on motor vehicle bodies
Dispositif de fixation pour baguettes décoratives de carrosseries automobiles

(30) Priorität: 10.11.2004 DE 102004054404
(43) Veröffentlichungstag der Anmeldung: 24.05.2006
(73) Patentinhaber: Newfrey LLC, Newark, Delaware 19711 (US)
(72) Erfinder: Stigler, Mario, 35641 Schöffengrund (DE); Werner, Wolfgang, 72766 Reutlingen (DE); Hahn, Ernst Ludwig, 35466 Rabenau (DE); Nitsch, Jürgen, 73663 Berglen (DE)
(74) Vertreter: Haar, Lucas Heinz Jörn

(56) Entgegenhaltungen:
- EP-A- 1 097 829
- DE-C1- 3 230 317
- DE-U1- 9 413 049
- US-A- 5 575 527

## Beschreibung

Die Erfindung betrifft eine Befestigungsvorrichtung für eine Zierleiste oder dergleichen an Spalten, Nuten oder dergleichen von Kraftwagen-Aufbauten mit einem in den Spalt einzusetzenden, die Zierleiste haltenden, mehrteiligen Haltekörper, der gegen die Seitenwände des Spaltes spannbar ist.

Bei einer aus DE 32 30 317 C1 bekannten Befestigungsvorrichtung der angegebenen Art sind beide Teile eines zweiteilig ausgebildeten Haltekörpers entlang einer Trennungslinie, die unter einem Winkel zur Längsachse der zu haltenden Leiste verläuft, gegeneinander verschiebbar und über eine Verzahnung miteinander lösbar verrastet. Beim Verschieben der Teile gegeneinander entlang der Trennungslinie bewegen sich die in Verschieberichtung liegenden Außenkanten beider Teile unter ständiger Abstandsänderung parallel zueinander bis der Haltekörper in dem Spalt festgekeilt ist. Ein Teil des Haltekörpers weist in einer nach oben offenen Nut eine Klemmfeder zum Festlegen eines von der Zierleiste nach unten abragenden Halteschenkels auf. Bei dieser bekannten Befestigungsvorrichtung wird als nachteilig angesehen, daß zum Verschieben der Teile gegeneinander ein hoher Kraftaufwand erforderlich ist. Weiterhin kann das Verschieben die lackierte Oberfläche der Wände des Spalts beschädigen. Um die Teile des Haltekörpers gegeneinander verschieben zu können, müssen sie zugänglich sein. Die Zierleiste kann daher erst nachträglich mit dem Haltekörper verbunden werden.

Es ist ferner aus DE 94 13 049 U1 eine Vorrichtung zum Befestigen einer Abdeckleiste für eine nach außen offene Nut an Kraftwagen-Aufbauten bekannt, bei der der Haltekörper einen doppelseitig wirkenden Spannexzenter enthält, dessen Rotationsachse senkrecht zum Nutboden steht und dessen zwei Exzenterflächen auf parallel zueinander angeordnete und quer zur Nutachse gegen die Nutwände bewegliche Leisten einwirkt. Zur Fixierung der Spannstellung rastet eine federnde Nase nach Art eines Klinkengesperres in eine Umfangsverzahnung des Spannexzenters ein. In Richtung der Nutenachse gesehen sind vor und hinter dem Spannexzenter je eine federnde Aufnahme für die Befestigung der Abdeckleiste oder eines zwischengeschalteten Adapters vorgesehen. Auch diese Gestaltung erfordert eine Montage des Haltekörpers bevor die Abdeckleiste daran befestigt werden kann.

Dem Oberbegriff des Anspruchs 1 liegt eine aus EP-A-1 097 829 bekannte Befestigungsvorrichtung für eine Sonnenblende zugrunde, die mittels eines schwenkbaren Spannhebels in einer Öffnung einer Verkleidungsplatte festspannbar ist. Der Spannhebel weist hierbei einen ersten, durch die Öffnung hindurchgreifenden Hebelarm und einen kürzeren zweiten Hebelarm auf, der am äußeren Rand der Öffnung abstützbar ist und durch den der Spannhebel bei dem Andrücken der Vorrichtung an die Verkleidungsplatte in eine Spannstellung schwenkbar ist. Ein dritter Hebelarm des Spannhebels ist an seinem Ende mit einer Sperrklinke versehen, die in der Spannstellung in Sperrzähne der Befestigungsvorrichtung einrastet und dadurch den Spannhebel in der Spannstellung festhält.

Der Erfindung liegt die Aufgabe zugrunde, eine Befestigungsvorrichtung der eingangs genannten Art zu schaffen, die eine gemeinsame Montage von Zierleiste und Haltekörper in dem Spalt ermöglicht. Hierbei soll der Montagevorgang möglichst einfach ausführbar sein.

Die Aufgabe wird durch die in Patentanspruch 1 angegebene Erfindung gelöst. Vorteilhafte Ausgestaltungen der Erfindung sind in den Unteransprüchen angegeben.

Nach der Erfindung ist vorgesehen, daß der Haltekörper einen schwenkbaren Spannhebel mit einem ersten gegen eine Seitenwand des Spalts spannbaren Hebelarm und einem zweiten Hebelarm aufweist, der eine größere Länge hat als der erste Hebelarm und der bei dem Einsetzen des Haltekörpers in den Spalt mit einem Wandbereich des Spalts derart zusammenwirkt, daß der Spannhebel in eine den Haltekörper in dem Spalt festhaltende Spannstellung verschwenkt wird. Die erfindungsgemäße Gestaltung des Haltekörpers hat den Vorteil, daß der Haltekörper durch den gleichen Bewegungsvorgang, mit dem er in den Spalt eingebracht wird, auch in diesem festgeklemmt wird. Hierdurch wird der Montagevorgang sehr vereinfacht und die Möglichkeit geschaffen, die Zierleiste vor der Montage des Haltekörpers an diesem anzubringen und gemeinsam mit dem Haltekörper zu montieren. Weiterhin ist es vorteilhaft, dass der zweite Hebelarm des Spannhebels eine größere Länge als der erste Hebelarm hat. Durch die unterschiedliche Länge der Hebelarme wird eine Kraftübersetzung in der Weise erreicht, daß die Kraft zum Einsetzen und Festspannen des Haltekörpers deutlich kleiner ist als die Kraft mit der der Spannkörper in dem Spalt festgeklemmt und gehalten wird.

Die Schwenkachse des Spannhebels erstreckt sich vorzugsweise in Längsrichtung des Spalts, es können aber auch Abweichungen hiervon zweckmäßig sein. Zur Sicherung des Spannhebels in der Spannstellung ist ein federndes Rastgesperre vorgesehen, welches vorzugsweise aus einer an dem zweiten Hebelarm des Spannhebels angebrachten, sägezahnförmigen Rastnase und einer an dem Haltekörper vorgesehenen Aussparung zum Einrasten der Rastnase besteht. Alternativ hierzu kann auch vorgesehen sein, daß die in der Spannstellung auf den Spannhebel einwirkende Klemmkraft ein Drehmoment hervorruft, welches bestrebt ist, den Spannhebel in der Spannstellung zu halten.

Vorzugsweise ist der zweite Hebelarm des Spannhebels an der Unterseite des Haltekörpers angeordnet, wobei er mit dem Bodenbereich des Spaltes zusammenwirkt. Um die Schwenklagerung des Spannhebels zu entlasten kann erfindungsgemäß weiterhin vorgesehen sein, daß das Ende des zweiten Hebelarmes des Spannhebels in der Spannstellung an einem auf der dem ersten Hebelarm entgegengesetzten Seite angeordneten, an der anderen Seitenwand des Spalts anliegenden, federnden ersten Sperrfinger abgestützt ist. Durch diese Gestaltung werden die entgegengesetzten Kräfte zur Festklemmung des Haltekörpers in dem Spalt auch unmittelbar von dem Spannhebel und dem Sperrfinger übertragen und die Schwenklagerung des Spannhebels zumindest teilweise entlastet. Auf der dem ersten Sperrfinger entgegengesetzten Seite kann der Haltekörper wenigstens einen zweiten federnden Sperrfinger aufweisen, der dem ersten Hebelarm benachbart ist. Mit Hilfe der federnden Sperrfinger kann der Haltekörper außerdem mit geringer Kraft vormontiert werden, bevor er dann durch Aufwenden einer höheren, gegen den Boden des Spalts gerichteten Kraft in die endgültige Sperrstellung gebracht wird.

Nach einem weiteren Vorschlag der Erfindung kann der Haltekörper zusätzlich durch wenigstens eine Feder, insbesondere Blattfeder, an dem Bodenbereich des Spaltes abgestützt sein.

Zu seiner Lagerung weist der Spannhebel vorzugsweise zwei koaxiale Lagezapfen auf, die in einseitig radial offenen Lagerschalen des Haltekörpers eingreifen. Zum Festhalten der Lagerzapfen in den Lagerschalen sind weiterhin an dem Spannhebel federnde Finger ausgebildet, deren Enden in Aussparungen auf der Außenseite der Lagerschalen eingreifen und für die Positionierung des Spannhebels in der für die Montage geeigneten Ausgangslage sorgen.

An seiner Oberseite hat der Haltekörper eine Aufnahme für die Zierleiste. Die Aufnahme weist wenigstens ein seitliches Federelement mit Hinterschnitt auf, das in einer Längsausnehmung der Zierleiste einrastet. Zusätzlich kann die Aufnahme wenigstens eine an die Innenseite der Zierleiste andrückbare Feder, insbesondere eine nach oben gewölbte Blattfeder haben, durch die die Zierleiste mit der Aufnahme verspannt wird, um eine Sicherung gegen Verschieben in Längsrichtung der Zierleiste zu erreichen.

Die Erfindung wird nachfolgend anhand eines Ausführungsbeispiels näher erläutert, daß in der Zeichnung dargestellt ist. Es zeigen
- Figur 1: eine perspektivische Ansicht der Vorderseite des Haltekörpers einer erfindungsgemäßen Befestigungsvorrichtung,
- Figur 2: eine perspektivische Ansicht der Rückseite des Haltekörpers gemäß Figur 1,
- Figur 3: eine perspektivische Ansicht des Spannhebels der Befestigungsvorrichtung,

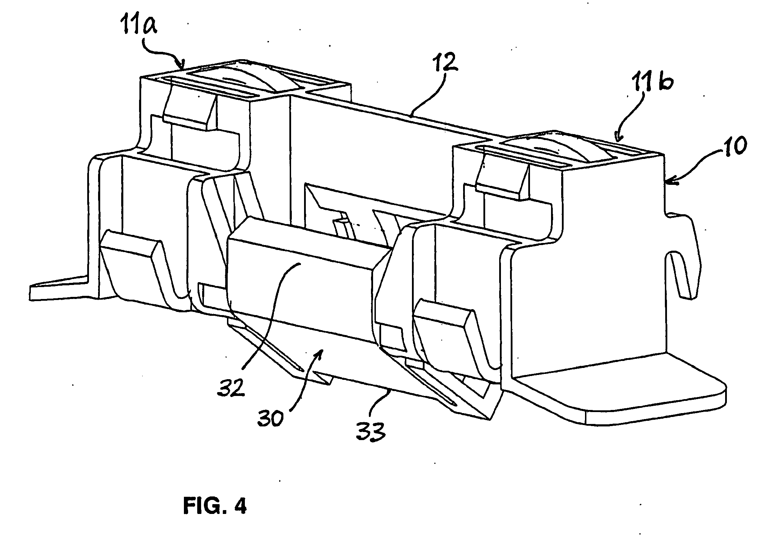

- Figur 4: eine perspektivische Ansicht der Vorderseite der zusammengesetzten Befestigungsvorrichtung,
- Figur 5: eine Schnittansicht der Befestigungsvorrichtung in Lösestellung und
- Figur 6: eine Schnittansicht der Befestigungsvorrichtung in Spannstellung.

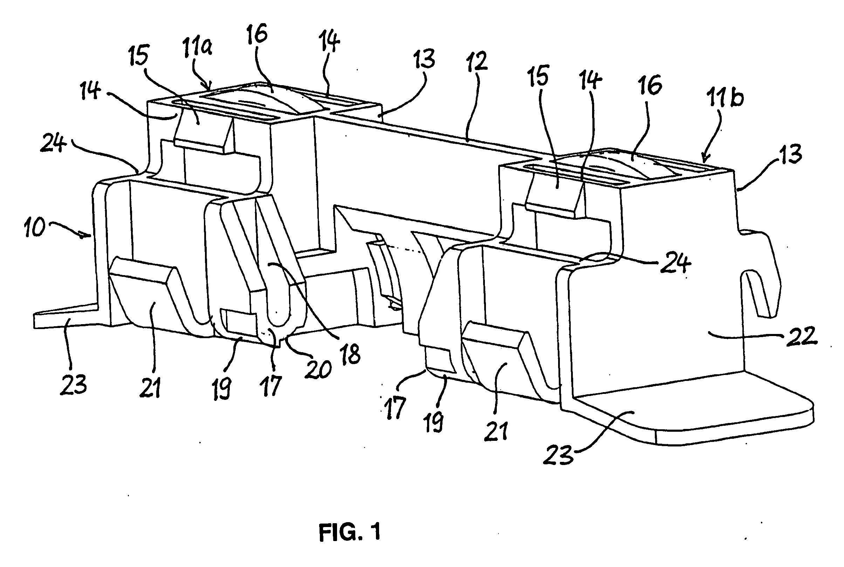

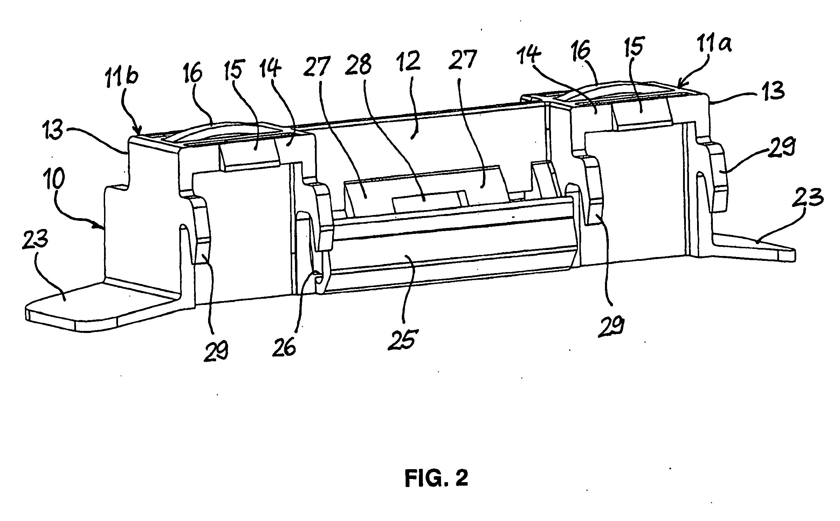

Wie aus den Figuren 1 und 2 zu ersehen, weist der Haltekörper 10 zwei in einem Abstand voneinander angeordnete, kastenförmige Abschnitte 11a, 11b auf, die durch einen sich in Längsrichtung des Haltekörpers 10 erstreckenden, plattenförmigen Steg 12 miteinander verbunden sind. Die Abschnitte 11a, 11b, sind in Bezug auf eine zum Steg 12 senkrechte, mittige Ebene symmetrisch ausgebildet. Jeder Abschnitt 11a, 11b trägt an seiner Oberseite eine Aufnahme 13 für eine sich in Richtung des Stegs 12 erstreckende Zierleiste. Die Aufnahmen 13 haben auf ihren entgegengesetzten Längsseiten jeweils ein Federelement 14 mit einer sägezahnförmigen Rastnase 15. In der Mitte zwischen den Federelementen 14 befindet sich jeweils eine sich in Längsrichtung erstreckende, nach oben gebogene Blattfeder 16, die dazu bestimmt ist, sich mit Vorspannung an der Innenseite der an der Aufnahme anzubringenden Zierleiste abzustützen.

Angrenzend an die Vorderseite tragen die Abschnitte 11a, 11b auf ihren einander zugekehrten Seiten nach oben offene Lagerschalen 17, die nach oben in eine Einführrinne 18 übergehen. In der halbzylindrischen Außenfläche 19 der Lagerschalen 17 ist jeweils eine Aussparung 20 vorgesehen, die sich von der tiefsten Stelle der Außenfläche 19 über einen Winkel von etwa 30° bis 40° nach innen in Richtung auf den Steg 12 erstreckt. Beiderseits der Lagerschalen 17 sind an der Vorderseite der Abschnitte 11a, 11b federnde Spannfinger 21 angeordnet, die sich vom unteren Rand der Abschnitte 11a, 11b schräg nach oben erstrecken, wobei sie in einem sich nach oben öffnenden Winkel von etwa 25° zur Vorderseite der Abschnitte 11a, 11b geneigt sind. Am unteren Rand der voneinander abgekehrten parallelen Stirnflächen 22 der Abschnitte 11a, 11b sind von den Stirnflächen 22 abstehende Blattfedern 23 ausgebildet, die sich in einem Winkel von etwa 100° zu den Stirnflächen 22 schräg nach unten erstrecken. Die Blattfedern 23 sind dazu bestimmt, sich an dem Spaltboden mit Vorspannung abzustützen, um dadurch die Klemmwirkung der Befestigungsvorrichtung zu erhöhen.

Unterhalb der Aufnahmen 13 sind die Abschnitte 11a, 11b unter Ausbildung einer Stufe 24 in Richtung der Vorderseite verbreitert. Durch die Stufen 24 wird eine Abstützfläche geschaffen an der sich die Zierleiste bei der Montage der Befestigungsvorrichtung bei Bedarf zusätzlich abstützen kann.

Auf der in Figur 2 dargestellten Rückseite weist der Haltekörper 10 einen zentralen Sperrfinger 25 auf, der sich etwa über die gesamte Breite des Zwischenraums zwischen den Abschnitten 11a, 11b erstreckt. Der Sperrfinger 25 ist an einer mit beiden Abschnitten 11a, 11b verbundenen und sich längs des unteren Randes des Haltekörpers erstreckenden Rippe 26 angeformt, die über gekrümmte Verbindungsstege 27 mit dem Steg 12 verbunden ist. Zwischen den Verbindungsstegen 27 befindet sich eine Aussparung 28. Der Sperrfinger 25 erstreckt sich von der Rippe 26 aus im wesentlichen parallel zu dem Steg 12 nach oben und sein oberhalb der Rippe 26 befindliche Bereich ist in Richtung auf die Verbindungsstege 27 federnd nachgiebig. Die dem Betrachter in Figur 2 zugewandte Außenseite des Sperrfingers 25 hat eine dachförmige Erhebung, die dazu bestimmt ist, in einen leicht hinterschnittenen Abschnitt der Seitenwand des den Haltekörper 10 aufnehmenden Spalts einzugreifen. Die Abschnitte 11a, 11b haben auf der Rückseite des Haltekörpers 10 nach unten gerichtete Haken 29, die zum Übergreifen der Seitenwand des Spaltes dienen.

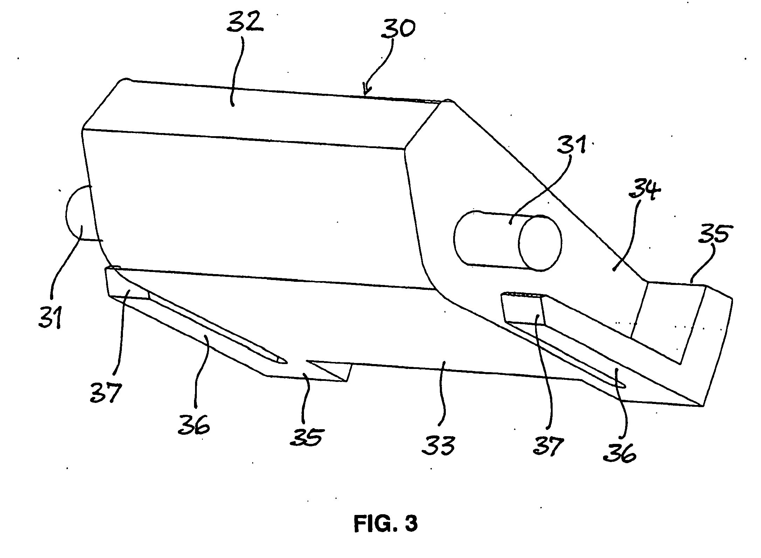

In Figur 3 ist der Spannhebel 30 der Befestigungsvorrichtung dargestellt, der im wesentlichen die Form einer abgewinkelten Platte hat. Nahe dem Scheitel der Abwinklung ist durch koaxiale Lagerzapfen 31, die sich auf entgegengesetzten Seiten des Spannhebels 30 befinden, eine Schwenkachse gebildet. Scheitel und Schwenkachse sind außermittig angeordnet, wodurch ein kurzer erster Hebelarm 32 und ein langer zweiter Hebelarm 33 gebildet ist. An den entgegengesetzten Stirnseiten 34 weist der zweite Hebelarm 33 sich parallel zu den Lagerzapfen 31 erstreckende quaderförmige Ansätze 35 auf, die federnde Finger 36 tragen. Die federnden Finger 36 erstrecken sich parallel zu den Stirnseiten 34 bis in die Nähe der Lagerzapfen 31 und weisen an ihren Enden zum Eingreifen in die Aussparungen 20 der Lagerschalen 17 bestimmte Klinken 37 auf. Die Ansätze 35 haben außerdem die Aufgabe, in der Montagestellung eine Abstützung für den ersten Sperrfinger zu bilden.

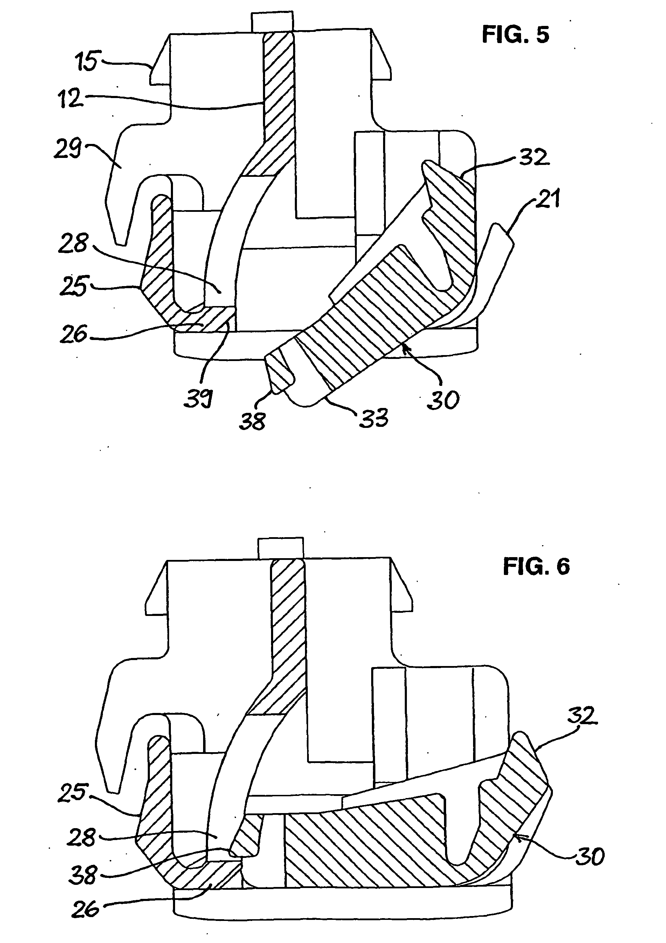

Wie aus Figur 5 zu ersehen, ist am Ende des zweiten Hebelarms 33 des Spannhebels 30 eine in Richtung auf die Schwenkachse federnd nachgiebige Rastnase 38 ausgebildet, die im Zusammenwirken mit der Rippe 26 ein Rastgesperre zum Festhalten des Spannhebels 30 in der in Figur 6 gezeigten Spannstellung bildet. An der Rippe 26 befindet sich im Schwenkbereich der Rastnase 38 eine geneigte Rampenfläche 39, über welche die Rastnase 38 hinweggleiten kann. Ist die in Figur 6 gezeigte Spannstellung erreicht, greift die Rastnase 38 in die Aussparung 28 ein und verhindert eine Rückkehr des Spannhebels 30 in die Ausgangsstellung, in dem sie sich an der Rippe 26 abstützt.

Die in Figur 6 gezeigte Spannstellung wird durch Einsetzen der Befestigungsvorrichtung in einen beispielsweise U-förmigen Spalt am Aufbau eines Kraftwagens erreicht, wobei der Bodenbereich des Spalts die Drehung des Spannhebels 30 in die Spannstellung bewirkt. In der Spannstellung stützen sich der Spannhebel 30 und der Sperrfinger 25 über die Rippe 26 unmittelbar aneinander ab und sorgen hierdurch für eine direkte Aufnahme der aus dem Andrücken des ersten Hebelarms 32 und des Sperrfingers 25 an die Seitenwände des Spalts resultierenden Reaktionskräfte.

Bei dem beschriebenen Ausführungsbeispiel ist der Spannhebel so gestaltet, dass die auf den Hebelarm 32 in der Spannstellung einwirkende Klemmkraft ein Drehmoment erzeugt, das der Spannbewegung entgegenwirkt. Der Spannhebel muss daher durch das aus der Rastnase 38 und der Rippe 26 gebildete Rastgesperre in der Spannstellung festgehalten werden. Als Alternative hierzu kann der Spannhebel jedoch auch so gestaltet sein, dass die in der Spannstellung auf ihn einwirkende Klemmkraft ein Drehmoment hervorruft, welches bestrebt ist, den Spannhebel in der Spannstellung zu halten.

## Patentansprüche

1. Befestigungsvorrichtung für eine Zierleiste oder dergleichen an Spalten, Nuten oder dergleichen von Kraftwagen-Aufbauten mit einem in den Spalt einzusetzenden, die Zierleiste haltenden, mehrteiligen Haltekörper, der gegen die Seitenwände des Spaltes spannbar ist, wobei der Haltekörper (10) einen schwenkbaren Spannhebel (30) mit einem ersten Hebelarm (32) und einem zweiten Hebelarm (33) aufweist, der bei dem Einsetzen des Haltekörpers (10) in den Spalt mit einem Wandbereich des Spalts derart zusammen wirkt, dass der Spannhebel (30) in eine den Haltekörper (10) in dem Spalt festhaltende Spannstellung verschwenkt wird, **dadurch gekennzeichnet, daß** der erste Hebelarm (32) gegen eine Seitenwand des Spalts spannbar ist und daß der zweite Hebelarm (33) eine größere Länge hat als der erste Hebelarm (32).

2. Befestigungsvorrichtung nach Anspruch 1, **dadurch gekennzeichnet, daß** die Schwenkachse des Spannhebels (30) sich in Längsrichtung des Spalts erstreckt.

3. Befestigungsvorrichtung nach einem der vorhergehenden Ansprüche, **dadurch gekennzeichnet, daß** zur Sicherung des Spannhebels (25) in der Spannstellung ein federndes Rastgesperre vorgesehen ist.

4. Befestigungsvorrichtung nach Anspruch 3, **dadurch gekennzeichnet, dass** an dem zweiten Hebelarm (33) des Spannhebels (25) eine sägezahnförmige Rastnase (38) angebracht ist, die in eine an dem Haltekörper (10) angeordnete Aussparung einrastet.

5. Befestigungsvorrichtung nach einem der vorhergehenden Ansprüche, **dadurch gekennzeichnet, daß** der Spannhebel so gestaltet ist, daß die auf den ersten Hebelarm des Spannhebels einwirkende Klemmkraft ein Drehmoment erzeugt, welches bestrebt ist, den Spannhebel in der Spannstellung zu halten.

6. Befestigungsvorrichtung nach einem der vorhergehenden Ansprüche, **dadurch gekennzeichnet, daß** der zweite Hebelarm (33) des Spannhebels (25) an der Unterseite des Haltekörpers (10) angeordnet ist und mit dem Bodenbereich des Spaltes zusammenwirkt.

7. Befestigungsvorrichtung nach einem der vorhergehenden Ansprüche, **dadurch gekennzeichnet, dass** das Ende des zweiten Hebelarms (33) des Spannhebels (25) in der Spannstellung an einem auf der dem ersten Hebelarm (32) entgegengesetzten Seite angeordneten, an der anderen Seitenwand des Spalts anliegenden, federnden Sperrfinger des Haltekörpers (10) abgestützt ist.

8. Befestigungsvorrichtung nach einem der vorhergehenden Ansprüche, **dadurch gekennzeichnet, daß** der Haltekörper (10) wenigstens einen zweiten federnden Sperrfinger (31) aufweist, der dem ersten Hebelarm (32) des Spannhebels (25) benachbart ist.

9. Befestigungsvorrichtung nach einem der vorhergehenden Ansprüche, **dadurch gekennzeichnet, daß** der Haltekörper (10) durch wenigstens eine Feder (23) insbesondere Blattfeder, an dem Bodenbereich des Spaltes abgestützt ist.

10. Befestigungsvorrichtung nach einem der vorhergehenden Ansprüche, **dadurch gekennzeichnet, daß** der Spannhebel (25) zwei koaxiale Lagezapfen (31) aufweist, die in einseitig radial offene Lagerschalen (17) des Haltekörpers (10) eingreifen.

11. Befestigungsvorrichtung nach einem der vorhergehenden Ansprüche, **dadurch gekennzeichnet, daß** an dem Spannhebel (25) federnde Finger (37) ausgebildet sind deren Enden in Aussparungen (20) auf der Außenseite der Lagerschalen (17) eingreifen.

12. Befestigungsvorrichtung nach einem der vorhergehenden Ansprüche, **dadurch gekennzeichnet, daß** der Haltekörper (10) an seiner Oberseite eine Aufnahme (13) für die Zierleiste hat.

13. Befestigungsvorrichtung nach Anspruch 12, **dadurch gekennzeichnet, daß** die Aufnahme (13) wenigstens ein seitliches Federelement (14) mit Hinterschnitt aufweist, das in eine Längsausnehmung der Zierleiste einrastet.

14. Befestigungsvorrichtung nach einem der Ansprüche 12 und 13, **dadurch gekennzeichnet, daß** die Aufnahme (13) wenigstens eine an die Innenseite der Zierleiste andrückbare Feder (16), insbesondere eine nach oben gewölbte Blattfeder, hat.

## Claims

1. Fastening device for a trim strip or the like on slots, grooves or the like of motor vehicle bodies, having a multiple-part retaining member holding the trim strip and to be inserted into the slot, which is capable of being tightened against the side walls of the slot, whereof the retaining member (10) has a pivoting tightening lever (30) with a first lever arm (32) and a second lever arm (33) that upon insertion of the retaining member (10) into the slot cooperates with a wall region of the slot in such a way that the tightening lever (30) is swung into a tightening position holding the retaining member (10) firmly in the slot; **characterised in that** first lever arm (32) is capable of being tightened against a side wall of the slot and that the second lever arm (33) of the tightening lever (25) has a greater length than the first lever arm (32).

2. Fastening device according to Claim 1, **characterised in that** the pivot axis of the tightening lever (30) extends in the longitudinal direction of the slot.

3. Fastening device according to any of the preceding claims, **characterised in that** a springy locking catch is provided for securing the tightening lever (25) in the tightening position.

4. Fastening device according to Claim 3, **characterised in that** a saw tooth-shaped locking nose (38), which engages in a recess provided on the retaining member (10), is mounted on the second lever arm (33) of the tightening lever (25).

5. Fastening device according to any of the preceding claims, **characterised in that** the tightening lever is designed like this that the clamping force acting on the first lever arm of the tightening lever produces a torque that seeks to hold the tightening lever in the tightening position.

6. Fastening device according to any of the preceding claims, **characterised in that** the second lever arm (33) of the tightening lever (25) is located on the underside of the retaining member (10) and cooperates with the floor region of the slot.

7. Fastening device according to any of the preceding claims, **characterised in that** the end of the second lever arm (33) of the tightening lever (25) is supported in the tightening position on a springy locking finger of the retaining member (10), located on the side opposite the first lever arm (32) and resting on the other side wall of the slot.

8. Fastening device according to any of the preceding claims, **characterised in that** the retaining member (10) has at least a second springy locking finger (31), which is adjacent to the first lever arm (32) of the tightening lever (25).

9. Fastening device according to any of the preceding claims, **characterised in that** the retaining member (10) is supported by at least one spring (23), in particular a leaf spring, on the floor region of the slot.

10. Fastening device according to any of the preceding claims, **characterised in that** the tightening lever (25) has two coaxial bearing journals (31), which engage in bearing shells (17) of the retaining member (10), open radially on one side.

11. Fastening device according to any of the preceding claims, **characterised in that** springy fingers (37), whose ends engage in recesses (20) on the outer side of the bearing shells (17), are formed on the tightening lever (25).

12. Fastening device according to any of the preceding claims, **characterised in that** the retaining member (10) has on its upper side an accommodation (13) for the trim strip.

13. Fastening device according to Claim 12, **characterised in that** the accommodation (13) has at least one lateral spring element (14) with an undercut, which engages in a longitudinal recess of the trim strip.

14. Fastening device according to either of Claims 12 or 13, **characterised in that** the accommodation (13) has at least one spring (16), in particular a leaf spring arched upward, capable of being pressed on the inner side of the trim strip.

## Revendications

1. Dispositif de fixation pour une baguette décorative ou similaire dans des fentes, rainures, ou similaires de carrosseries automobiles, comprenant un corps de maintien en plusieurs parties à insérer dans la fente, maintenant la baguette décorative, pouvant être serré contre les parois latérales de la fente, le corps de maintien (10) comprenant un levier de serrage oscillant (30) ayant un premier bras de levier (32) et un deuxième bras de levier (33), levier qui, lors de l'insertion du corps de maintien (10) dans la fente, coopère avec une partie de paroi de la fente de manière telle que le levier de serrage (30) soit basculé dans une position de serrage retenant fermement le corps de maintien dans la fente,
**caractérisé en ce que** le premier bras de levier (32) peut être serré contre une paroi latérale de la fente, et que le deuxième bras de levier (33) présente une longueur supérieure à celle du premier bras de levier (32).

2. Dispositif de fixation selon la revendication 1, **caractérisé en ce que** l'axe d'oscillation du levier de serrage (30) s'étend dans la direction longitudinale de la fente.

3. Dispositif de fixation selon l'une des revendications précédentes, **caractérisé en ce qu'**un mécanisme d'arrêt élastique est prévu pour arrêter le levier de serrage (25) dans la position de serrage.

4. Dispositif de fixation selon la revendication 3, **caractérisé en ce qu'**un cran d'arrêt (38) en forme de dent de scie est aménagé sur le deuxième bras de levier (33) du levier de serrage (25) pour s'enclencher dans un évidement aménagé dans le corps de maintien (10).

5. Dispositif de fixation selon l'une des revendications précédentes, **caractérisé en ce que** le levier de serrage est configuré de manière telle que la force de serrage agissant sur le premier bras de levier du levier de serrage produise un couple de rotation qui tend à maintenir le levier de serrage dans la position de serrage.

6. Dispositif de fixation selon l'une des revendications précédentes, **caractérisé en ce que** le deuxième bras de levier (33) du levier de serrage (25) est monté à la face inférieure du corps de maintien (10) et coopère avec la zone de fond de la fente.

7. Dispositif de fixation selon l'une des revendications précédentes, **caractérisé en ce que** l'extrémité du deuxième bras de levier (33) du levier de serrage (25) s'appuie, en position de serrage, sur un doigt de blocage élastique du corps de maintien (10), qui est disposé du côté opposé au premier bras de levier (32) et porte contre l'autre paroi latérale de la fente.

8. Dispositif de fixation selon l'une des revendications précédentes, **caractérisé en ce que** le corps de maintien (10) comporte au moins un deuxième doigt de blocage élastique (31) qui est contigu au premier bras de levier (32) du levier de serrage (25).

9. Dispositif de fixation selon l'une des revendications précédentes, **caractérisé en ce que** le corps de maintien (10) est maintenu en appui sur la zone de fond de la fente par l'intermédiaire d'au moins un ressort (23), en particulier un ressort à lame.

10. Dispositif de fixation selon l'une quelconque des revendications précédentes, **caractérisé en ce que** le levier de serrage (25) comporte deux axes de pivot coaxiaux (31) qui s'engagent dans des coquilles de palier (17) du corps de maintien (10) ouvertes sur un côté radial.

11. Dispositif de fixation selon l'une quelconque des revendications précédentes, **caractérisé en ce que** des doigts élastiques (37) sont formés sur le levier de serrage (25), dont les extrémités s'engagent dans des évidements (20) aménagés sur le côté extérieur des coquilles de palier (17).

12. Dispositif de fixation selon l'une quelconque des revendications précédentes, **caractérisé en ce que** le corps de maintien (10) comporte, à sa face supérieure, un logement (13) pour la baguette décorative.

13. Dispositif de fixation selon la revendication 12, **caractérisé en ce que** le logement (13) comporte au moins un élément ressort latéral (14) contre-dépouillé, qui s'enclenche dans un évidement longitudinal de la baguette décorative.

14. Dispositif selon l'une des revendications 12 et 13, **caractérisé en ce que** le logement (13) comporte au moins un ressort (16) pouvant être mis en appui sur la face intérieure de la baguette décorative, en particulier un ressort à lame bombé vers le haut.
